# FASCICULE DE BREVET EUROPEEN

(11) **EP 0 748 522 B1**
(45) Date de publication et mention de la délivrance du brevet: **03.01.2001**
(21) Numéro de dépôt: 95943284.0
(22) Date de dépôt: 27.12.1995
(51) Int. Cl.: H01M 2/16, H01M 4/06

(54) **ELECTRODE BIFONCTIONNELLE POUR GENERATEUR ELECTROCHIMIQUE OU SUPERCONDENSATEUR ET SON PROCEDE DE FABRICATION**
BIFUNKTIONELLE ELEKTRODE FÜR ELEKTROCHEMISCHE GENERATOR ODER FÜR SUPERKONDENSATOR UND HERSTELLUNGSVERFAHREN
BIFUNCTIONAL ELECTRODE FOR AN ELECTROCHEMICAL GENERATOR OR SUPERCAPACITOR, AND METHOD FOR MAKING SAME

(30) Priorité: 28.12.1994 FR 9415790
(43) Date de publication de la demande: 18.12.1996
(73) Titulaire: SAFT, F-93230 Romainville (FR)
(72) Inventeur: ANDRIEU, Xavier, 91220 Bretigny-sur-Orge (FR); JOSSET, Laurence, 91530 Saint-Chéron (FR)
(74) Mandataire: Laroche, Danièle
(86) Numéro de dépôt international: FR9501742
(87) Numéro de publication internationale: WO9620504

(56) Documents cités:
- EP-A- 0 038 885
- EP-A- 0 243 653
- EP-A- 0 600 718
- EP-A- 0 618 629
- US-A- 3 023 261
- US-A- 4 524 509
- US-A- 4 885 007
- CHEMICAL ABSTRACTS, vol. 118, no. 16, 19 Avril 1993 Columbus, Ohio, US; abstract no. 149044, TAKEHATA, KOJI ET AL: "Continuous microporous-containing fluoropolymer membranes" XP002001519 & JP,A,04 239 041 (MITSUBISHI RAYON CO., LTD., JAPAN)

## Description

La présente invention concerne une électrode bifonctionnelle pour générateur électrochimique ou supercondensateur. Elle s'étend en outre à son procédé de fabrication.

Les électrodes des générateurs électrochimiques et des supercondensateurs classiques sont séparées par une couche d'un matériau isolant poreux qui est imprégné d'électrolyte. Ce séparateur constitue un composant indépendant, généralement disponible commercialement, qui est assemblé avec les autres composants lors du montage de l'élément électrochimique (générateur ou supercondensateur). Il doit donc posséder une tenue mécanique intrinsèque suffisante pour être manipulable et résister aux contraintes d'une fabrication industrielle automatisée. Ces composants présentent l'inconvénient d'être coûteux et de n'être pas spécifiquement adaptés au type de générateurs dans lequel ils sont utilisés. Les séparateurs classiques limitent l'amélioration des performances des générateurs électrochimiques et des supercondensateurs.

Afin de faciliter l'assemblage des composants, on a proposé d'utiliser un séparateur supporté par une électrode. La feuille poreuse servant de séparateur peut être préalablement fabriquée, puis rapportée sur l'électrode par un moyen mécanique comme le laminage ou la coextrusion avec le métal de l'électrode (EP-0 219 190 et EP-0 243 653), ou bien par une méthode chimique comme l'utilisation d'un adhésif (EP-0 195 684). L'opération est délicate à mettre en oeuvre pour éviter d'endommager le séparateur, ce qui exige un séparateur épais et de bonne tenue mécanique. En outre l'adhérence obtenue est imparfaite et les risques de décollement sont importants si l'électrode subit des variations dimensionnelles.

Le séparateur peut aussi être directement formé sur l'électrode qui lui sert de support.

Par exemple, une méthode consiste à déposer sur l'électrode le matériau du séparateur sous la forme d'une couche continue qui est rendue poreuse au cours d'une opération ultérieure, habituellement grâce à un additif porophore ajouté dans le matériau. Les demandes de brevet européen EP-0 143 566 et EP-0 146 246 décrivent une électrode de lithium métallique sur laquelle est déposée une couche d'un matériau protecteur non-poreux, par exemple par laminage ou extrusion. Ce matériau est ensuite rendu poreux par réaction avec l'un des composants de l'électrode ou grâce à la présence d'un additif. Cette méthode implique plusieurs opérations et l'utilisation d'additifs porophores dont le choix est limité par leur élimination complète ou par leur compatibilité avec les composants et les conditions de fonctionnement de l'élément électrochimique.

D'autres méthodes permettent de déposer directement une couche poreuse sur une électrode de métal massif. La demande de brevet européen EP-0 143 562 décrit le dépôt d'une couche poreuse sur une électrode en lithium à partir d'une solution qui est ensuite évaporée. Selon d'autres méthodes, le dépôt du monomère en solution peut être suivi de sa polymérisation in situ.

Le brevet américain US-3,023,261 décrit une méthode pour réaliser un ensemble électrode-séparateur pour accumulateurs à électrolyte alcalin aqueux. Les électrodes sont immergées dans une solution d'une résine synthétique dans un solvant, contenant un polymère gonflant dans l'eau insoluble dans le solvant. Puis un lavage à l'eau est effectué afin d'éliminer toute trace du solvant. Le polymère insoluble est destiné à permettre l'accès de l'électrolyte vers l'électrode. Selon le brevet américain US-4,524,509, ce procédé conduit à un revêtement qui présente des trous inacceptables pour un séparateur. En outre la solution de revêtement ne reste utilisable que très peu de temps après sa préparation.

Les brevets américains US-4,885,007 et US-4,524,509 décrivent un procédé permettant d'envelopper des électrodes de plomb par un séparateur microporeux.

Au cours de la première étape de ce procédé, la porosité de l'électrode est remplie d'un liquide. Le procédé décrit dans le brevet américain US-4,524,509 conduit à un ensemble où le séparateur n'adhère pas à l'électrode. Pour obtenir cette adhérence, il est indispensable, selon le brevet américain US-4,885,007, que la porosité de l'électrode soit remplie par un liquide anhydre.

Le procédé consiste à tremper ensuite l'électrode dans une solution de revêtement contenant un polymère soluble et une charge insoluble. De la durée du séjour dans la solution dépend l'adhérence du revêtement selon le brevet US-4,885,007. Le séchage à l'air de l'électrode conduit à un électrolyte gélifié (US-4,885,007) qui, une fois le solvant évaporé, présente toutes les caractéristiques décrites (US-4,524,509). On peut aussi n'effectuer le séchage que partiellement avant d'immerger l'électrode dans un non-solvant pour en éliminer le solvant (US-4,885,007).

La présente invention a pour but de proposer un supercondensateur ou un générateur électrochimique à électrolyte alcalin aqueux comportant une électrode incluant la fonction de siège de la réaction électrochimique et la fonction de séparateur, cette électrode étant obtenue par un procédé de fabrication est qui est plus simple et plus facile à mettre en oeuvre que les méthodes connues.

L'objet de la présente invention est un supercondensateur ou générateur électrochimique à électrolyte liquide non-aqueux comportant une électrode comprenant une première couche poreuse électroniquement conductrice contenant une matière électrochimiquement active, ladite première couche comportant au moins une face recouverte d'une deuxième couche microporeuse constituée d'un matériau polymère, ladite deuxième couche étant étroitement liée à ladite première couche et étant réalisée par précipitation dudit polymère au moyen d'un non-solvant à partir d'une solution dudit polymère imprégnant ladite face.

L'électrode selon l'invention remplit donc simultanément la fonction de siège de la réaction électrochimique, qui met en jeu la matière active contenue dans la première couche, et la fonction de séparateur assurée par la deuxième couche microporeuse qui s'imprègne de l'électrolyte liquide introduit dans le générateur ou le supercondensateur. La première et la deuxième couches sont ainsi étroitement liées l'une à l'autre, ce qui leur permet d'accompagner toute variation dimensionnelle de l'électrode au cours du cyclage.

De préférence encore, le volume poreux de ladite deuxième couche est compris entre 30% et 95%. Une porosité supérieure à 95% affecte la tenue mécanique du séparateur, mais si la porosité est insuffisante la deuxième couche introduira une résistance trop élevée en série.

De préférence, l'épaisseur de ladite deuxième couche est comprise entre 10µm et 100µm. Si l'épaisseur de la deuxième couche est trop faible, la répartition de matière sera inhomogène et la tenue mécanique du séparateur sera insuffisante (risque de perforation). L'augmentation de l'épaisseur de la deuxième couche au-delà de 100µm n'améliore pas les performances du générateur, mais conduit à une diminution de la capacité volumique par un accroissement du volume occupé par le séparateur.

Les polymères constituant ladite deuxième couche sont choisis pour leur résistance aux conditions de fonctionnement et leur inertie chimique vis à vis des composants du générateur électrochimique ou du supercondensateur.

Selon une première variante de réalisation, ladite deuxième couche est constituée d'un matériau polymère choisi parmi le polyfluorure de vinylidène (PVDF), le polychlorure de vinyl (PVC), le polymétacrylate de méthyle, le triacétate de cellulose (CA), une polysulfone, un polyéther, une polyoléfine comme le polyéthylène (PE), l'oxyde de polyéthylène (PEO), le polypropylène (PP), et leurs copolymères.

Selon une deuxième variante de réalisation, ladite deuxième couche est constituée d'un matériau polymère qui est un alliage du polyfluorure de vinylidène PVDF (CH₂-CF₂) avec un polymère choisi parmi une polysulfone, le polymétacrylate de méthyle, la polyvinylpyrolidone, et les copolymères de polyfluorure de vinylidène et de polytétrafluoréthylène (PTFE), de polyfluorure de vinylidène et d'hexafluorure de propylène, de polyacétate de vinyl (PVAC) et d'alcool polyvinylique (APV). Le PVDF possède une grande résistance mécanique et de bonnes caractéristiques électrochimiques, et ses alliages ont une grande résistance à la fatigue et à l'abrasion

Dans certains cas il est nécessaire d'ajouter un agent mouillant dans la deuxième couche à raison de moins de 10% en poids de polymère. Cet agent permet d'améliorer la pénétration et la répartition de l'électrolyte dans le séparateur.

Selon une forme d'exécution de l'invention, ladite deuxième couche est constituée d'un matériau polymère réticulé. Ainsi la structure du polymère est rendue plus rigide, et lorsque le matériau s'imprègne d'électrolyte son gonflement reste faible.

La première couche de l'électrode est réalisée de manière connue en fonction du type de générateur ou de supercondensateur que l'on souhaite obtenir.

Lorsque la tenue mécanique de la première couche est insuffisante, ou bien que cette première couche n'est pas suffisamment conductrice, l'électrode selon l'invention comprend en outre un support conducteur de courant. Ce support peut être constitué par exemple par un feuillard métallique, un métal déployé, une grille ou un tissu métallique.

Selon une première forme d'exécution de l'invention, ledit support est situé au contact de ladite première face de ladite première couche et ladite deuxième couche est adhérente à ladite deuxième face de ladite première couche. L'électrode est composée de l'empilement du support de la première couche contenant la matière active et de la deuxième couche polymère.

Selon une deuxième forme d'exécution de l'invention, ledit support est inclus dans ladite première couche et ladite deuxième couche est adhérente à ladite première face et à ladite deuxième face de ladite première couche. Par exemple le support peut être placé au centre de la première couche dont chacune des deux faces est recouverte de la deuxième couche polymère.

La présente invention a aussi pour objet un supercondensateur comportant une électrode dans laquelle la première couche contient une matière électrochimiquement active choisie parmi le charbon actif et un oxyde d'un métal de transition, comme l'iridium ou le ruthénium, et une deuxième couche constituée de polyfluorure de vinylidène. Une telle électrode convient plus particulièrement à un supercondensateur à électrolyte organique. Le supercondensateur comporte au moins une électrode selon l'invention mais il peut tout aussi bien comporter à la fois une électrode et une contre-électrode selon l'invention.

La présente invention a encore pour objet un générateur électrochimique comportant une électrode dans laquelle la première couche contient une matière électrochimiquement active choisie parmi les matériaux susceptibles d'intercaler un cation alcalin et une deuxième couche constituée de polyfluorure de vinylidène. Une telle électrode est plus particulièrement destinée à être utilisée dans un générateur électrochimique au lithium. Le générateur électrochimique peut comporter une électrode, anode ou cathode, selon l'invention et une contre-électrode de type classique; il contient en outre un électrolyte non aqueux composé d'un sel de lithium dans un solvant organique. Mais le générateur électrochimique peut aussi comporter à la fois une cathode et une anode selon l'invention placée face à face, de telle sorte que la deuxième couche de chacune des électrodes se trouve en contact. L'épaisseur de la deuxième couche sur chacune des électrode est ajustée en conséquence.

Dans le cas d'un générateur électrochimique au lithium, le matériau susceptible d'intercaler un ion lithium est par exemple du graphite ou du coke lorsqu'il s'agit d'une anode ou bien un oxyde lithié ou non lithié d'un métal de transition, comme le manganèse, le vanadium, le nickel, le cobalt, chrome ou titane pour une cathode.

L'utilisation d'une électrode selon la présente invention permet de supprimer le séparateur en tant que composant distinct, tout en constatant au niveau du couple électrochimique une percolation ionique et une tenue mécanique améliorées. La deuxième couche peut atteindre une porosité élevée et ainsi retenir une quantité d'électrolyte suffisante pour assurer une durée de vie maximale au générateur ou au supercondensateur. L'emploi d'une telle électrode est compatible avec la plupart des solvants d'électrolyte non aqueux.

L'électrode selon la présente invention permet d'augmenter la fiabilité des générateurs ou des supercondensateurs qui la contiennent, et d'améliorer leurs performances volumique et massique.

La présente invention a également pour objet un procédé de fabrication d'une électrode pour générateur électrochimique ou supercondensateur à électrolyte liquide non-aqueux, comprenant une première couche contenant la matière électrochimiquement active et une deuxième couche microporeuse constituée d'un matériau polymère. Ledit procédé comporte les étapes suivantes:
- on réalise ladite première couche,
- ladite première couche est recouverte d'un film de solution dudit polymère dans un solvant volatil,
- ledit film est ensuite mis en contact avec un premier non-solvant volatil miscible avec ledit solvant,
- ladite électrode est enfin séchée pour éliminer ledit solvant et ledit non-solvant.

Ledit solvant est un solvant organique choisi parmi la cyclohexanone, le dichlorométhane, la diméthylacétamide (DMA), la diméthylformamide (DMF), l'hexaméthylphosphoramide (HMP), la diméthylsulfoxyde (DMSO), le triéthylphosphate (TEP), la 1-méthyl-2-pyrolydone ou N-méthylpyrolidone (NMP) et leurs mélanges. On utilise de préférence un solvant organique dans lequel le polymère se dissout sans difficultés et qui peut être facilement éliminé par chauffage à une température modérée sans risque d'endommager la matière active.

Le polymère choisi est mis en solution concentrée dans ce solvant. La concentration en polymère ne doit pas être trop élevée car c'est l'un des paramètres qui conditionne la porosité de la deuxième couche; il est préférable que la solution contienne au moins 50% de solvant.

Selon une variante de réalisation ladite solution comprend en outre un non-solvant dans une proportion insuffisante pour provoquer la précipitation du polymère. On entend par non-solvant, un liquide dans lequel le polymère n'est pas soluble (non-solvant fort) ou est très peu soluble (non-solvant faible) à la température d'opération. Dans le cas où le non-solvant choisi est l'eau pure ou en mélange, cette température est comprise entre 5°C et 80°C. La présence d'une faible quantité d'un non-solvant faible favorise l'organisation tridimensionnelle du polymère lors de sa précipitation.

Le polymère en solution est déposé à la surface de la première couche de l'électrode par une méthode connue comme l'immersion, l'enduction, la pulvérisation, etc... Cette surface présente des irrégularités et une certaine porosité qui sont comblées par la solution et facilite l'accrochage de la deuxième couche.

Selon une variante de mise en oeuvre du procédé de l'invention, la première couche est imprégnée superficiellement d'un agent mouillant avant d'être recouverte dudit film de solution de polymère. Cet agent mouillant est par exemple un solvant organique volatil.

Le film de solution de polymère est ensuite mis en contact avec le non-solvant. Le solvant est alors remplacé par le non-solvant avec lequel il est miscible, ce qui provoque la précipitation du polymère. La récupération ultérieur du solvant extrait par le non-solvant est facilitée. Si le non-solvant choisi est l'eau, le procédé selon l'invention a l'avantage de ne pas être polluant pour l'environnement et de faciliter le recyclage des solvants.

Ledit premier et/ou ledit deuxième non-solvant sont choisis parmi l'eau, l'éthanol (CH₃OH), l'éthylène glycol, le glycérol, l'acétone, le carbonate de propylène (PC), le dichlorométhane, l'acétate d'éthyle, le butanol, le pentanol, l'acétonitrile et leurs mélanges.

Un film de polymère solide recouvre alors la surface de l'électrode. Il suffit d'évaporer par chauffage modéré le non-solvant, et éventuellement une partie du solvant résiduel, pour obtenir l'électrode selon l'invention. On peut réitérer les étapes du procédé plusieurs fois si on souhaite obtenir une deuxième couche plus épaisse.

Selon une autre variante, le procédé comporte en outre une étape de réticulation dudit polymère après séchage de ladite électrode, ladite solution contenant un agent de réticulation. Cette étape supplémentaire s'avère nécessaire pour certaines applications où une tenue mécanique élevée du séparateur est requise.

Le procédé de réalisation d'une électrode selon l'invention se compose d'opérations simples et permet la fabrication en continu de tous les constituants du couple électrochimique. En supprimant l'étape de découpe du séparateur en tant que composant, on évite les pertes de matières qui résultent habituellement des chutes de découpe, ainsi on minimise la quantité de matière perdue. Le coût de fabrication de l'électrode selon la présente invention est par conséquent inférieur à celui d'une électrode de l'art antérieur associée à un séparateur classique. En limitant le nombre d'opérations, on obtient un ensemble électrode-séparateur dont la réalisation est plus simple et plus fiable que par les procédés connus.

D'autres caractéristiques et avantages de la présente invention apparaîtront à la lecture des exemples suivants de modes de réalisation, donnés bien entendu à titre illustratif mais nullement limitatif, en référence au dessin annexé sur lequel:
- la figure 1 représente une vue en coupe éclatée d'un générateur électrochimique au lithium de type bouton selon l'art antérieur,
- la figure 2 représente une vue schématique partielle en coupe d'une électrode selon la présente invention,
- la figure 3 est analogue à la figure 1 pour un générateur électrochimique au lithium comportant une électrode selon la présente invention,
- la figure 4 montre les courbes d'évolution au cours du cyclage de la capacité C (en mAh/g) restituée par un générateur selon l'invention et d'un générateur de l'art antérieur en fonction du nombre de cycles effectués,
- la figure 5 montre les courbes d'évolution au cours du cyclage de la capacité F (en Farads) déchargée par un supercondensateur selon l'invention.
- la figure 6 est une photo par microscopie électronique (0,5cm=1µm) montrant la surface de la première couche de l'électrode,
- la figure 7 est une photo par microscopie électronique (1cm=1µm) montrant la surface de la deuxième couche de l'électrode selon l'invention.

### EXEMPLE 1

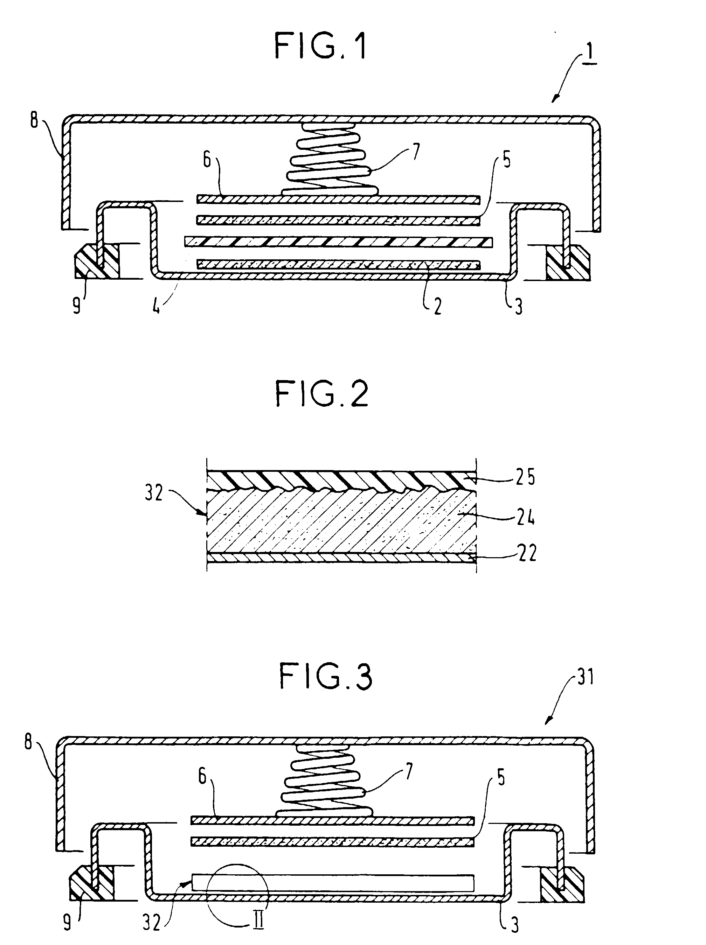

Afin de pouvoir tester une électrode de l'art antérieur, on réalise un générateur électrochimique 1 au lithium de type bouton tel que représenté sur la figure 1.

L'électrolyte est une solution d'un mélange de sels de lithium dans un solvant non-aqueux. Le solvant non-aqueux se compose de 20% de carbonate de propylène (PC), 20% de carbonate d'éthylène (EC) et de 60% de carbonate de diméthyle (DMC) dans lequel est dissous un mélange de sels de lithium composé de trifluorométhanesulfonimide de lithium LiN(CF₃SO₂)₂ (LiTFSI) à la concentration de 1,5M et de perchlorate de lithium LiClO₄ à la concentration de 0,1M.

L'électrode positive 2 est composée d'un collecteur de courant sur lequel est déposée une couche constituée de 90% en poids de graphite mélangé à un liant polymère PVDF. L'électrode est séchée à 110°C puis elle est imprégnée d'électrolyte et laminée à chaud, avant d'être déposée dans la coupelle 3 du générateur.

Le séparateur 4 est constitué d'une feuille de polypropylène de porosité 45%, d'épaisseur 50µm et de diamètre 22mm, qui a pour référence commerciale "CELGARD 2502". Le séparateur est imprégné d'électrolyte et déposé sur l'électrode positive 2.

L'électrode négative 5 est une pastille de lithium métallique de diamètre 14mm. Une cale en inox 6 assure la reprise du courant et un ressort 7 maintient le contact entre les différents éléments du générateur. L'ensemble est recouvert par un couvercle 8 et un joint 9 assure l'étanchéité du générateur.

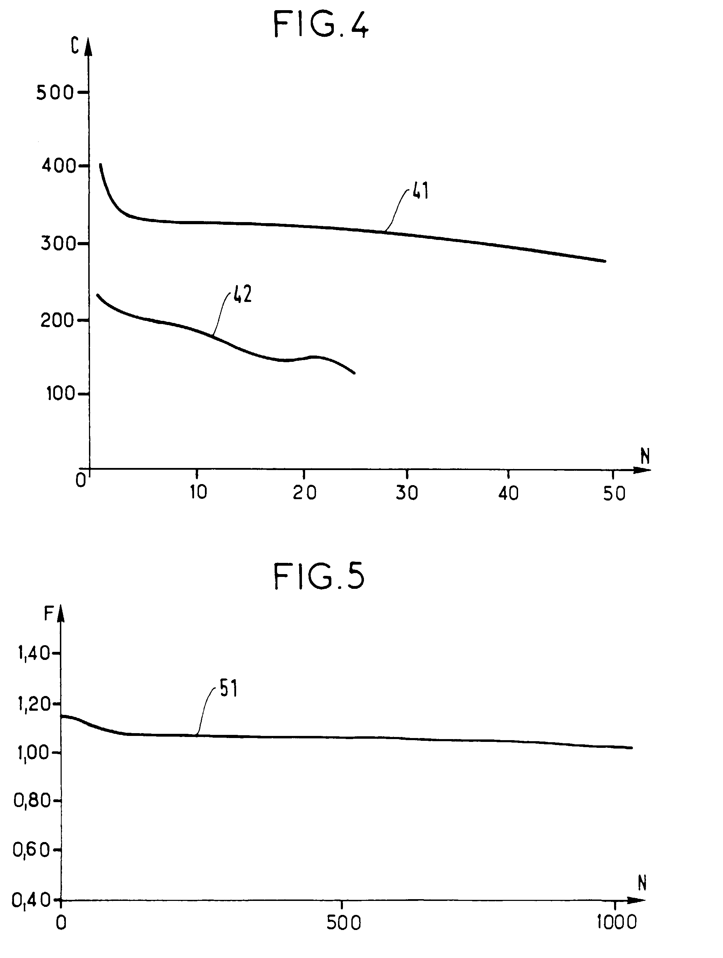

Le générateur 1 est cyclé entre 0 et 2 Volts à un courant de 20mA/g de graphite. La figure 4 montre la courbe de décharge 42 du générateur 1 de l'art antérieur. La capacité initiale est de 240mAh/g de graphite. Après 25 cycles, elle n'est plus que de 150mAh/g, soit une baisse de capacité de 37,5%.

### EXEMPLE 2

Afin de pouvoir tester une électrode selon la présente invention, on réalise un générateur électrochimique 31 de type bouton tel que représenté en coupe éclatée sur la figure 3, comportant une électrode 32 selon l'invention.

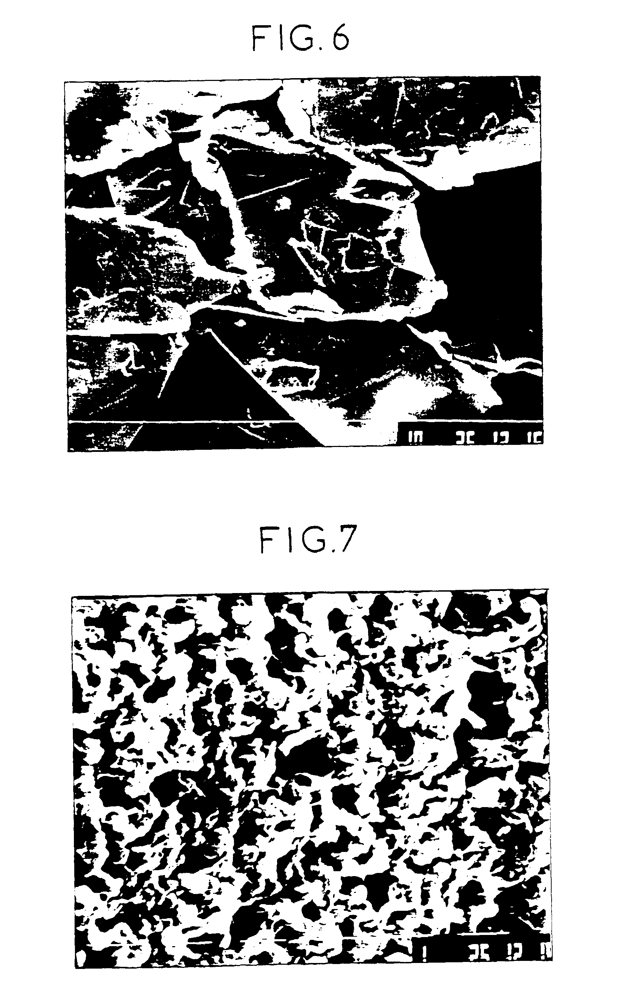

On peut voir sur la figure 2 une vue partielle en coupe de la partie II de l'électrode 32. L'électrode 32 est composée d'un collecteur de courant 23 en feuillard de cuivre sur l'une des deux faces duquel est déposée une première couche 24 à partir d'une pâte constituée d'au moins 90% en poids de graphite mélangé à 10% d'un liant polymère PVDF. L'électrode est séchée à 110°C puis elle est laminée à chaud. Sa surface est visible sur la figure 6.

La fabrication de la seconde couche 25 de l'électrode 32 comporte les opérations suivantes. On enduit la face de la première couche 24 opposée au collecteur de courant 23 par une solution contenant 12,5% en poids de PVDF et 87,5% de TEP de manière à déposer un film de solution sur sa surface. Après égouttage, l'électrode est plongée pendant 20 minutes dans l'eau qui est un non-solvant fort afin de provoquer la précipitation du polymère. L'électrode est ensuite séchée à l'air, d'abord à 35°C puis à 120°C, pour enlever toute trace d'eau. On obtient une couche de PVDF solide d'épaisseur 50µm et de porosité 75%, fortement adhérente à la première couche. Sa résistivité est environ cinq fois plus faible que celle du séparateur mentionné dans l'exemple 1. Sa surface est visible sur la figure 7.

L'électrode 32 préparée précédemment est imprégnée d'un électrolyte de même composition que celui décrit dans l'exemple 1 ce qui provoque le gonflement de la deuxième couche. Elle est disposée dans la coupelle 3 de telle sorte que le collecteur de courant 23 se trouve au contact de la coupelle 3. Une anode 5 de lithium métallique est placée par dessus directement au contact de la deuxième couche 25. Une cale en inox 6 assure la reprise du courant et un ressort 7 maintient le contact entre les différents éléments du générateur. L'ensemble est recouvert par un couvercle 8 et un joint 9 assure l'étanchéité du générateur.

Le générateur 31 est cyclé entre 0 et 2 Volts à un courant de 20mA/g de graphite. La figure 4 montre la courbe de décharge 41 du générateur 31 selon l'invention. La capacité initiale est de 350mAh/g de graphite. Après 50 cycles, elle est de 300mAh/g, soit une baisse limitée à 14,3%. Initialement la capacité du générateur 31 selon l'invention est supérieure de 46% par rapport à celle du générateur 1 de l'art antérieur décrit dans l'exemple 1, et cette valeur se maintient pendant plus de 50 cycles.

### EXEMPLE 3

Afin de pouvoir tester une électrode selon la présente invention, on réalise un générateur électrochimique analogue à celui de l'exemple 2 mais dont la deuxième couche de l'électrode positive est réalisée de la manière suivante.

On enduit la face de la première couche par une solution de 9,1% en poids de PVDF, de 54,5% de NMP et de 36,4% d'éthanol de manière à déposer un film de solution sur sa surface. Après égouttage, l'électrode est plongée dans de l'eau portée à 80°C, elle est ensuite séchée à l'air à 35°C. On obtient une couche de PVDF solide de porosité 25%.

### EXEMPLE 4

Afin de pouvoir tester une électrode selon la présente invention, on réalise un supercondensateur de type bouton comportant une électrode selon l'invention. L'électrode est composée d'un collecteur de courant qui est une feuille d'aluminium d'épaisseur 20µm sur l'une des deux faces duquel est enduite à l'aide d'une raclette une première couche d'une pâte constituée de 80% en poids de charbon actif de référence commerciale "SX ULTA NORIT" mélangé à 20% d'un liant polymère PVP en solution aqueuse. L'électrode est séchée pendant une heure à 110°C puis elle est laminée à chaud. La première couche est alors superficiellement imprégnée d'un agent mouillant, composé d'un mélange équivolumique d'éthanol et de PC. Ceci permet en outre de faciliter l'élimination des bulles d'air et de limiter la pénétration du PVDF dans l'électrode.

La réalisation de la seconde couche comporte les opérations suivantes. Sur la surface de la première couche, on étale à l'aide d'une tournette (disque tournant) une solution contenant 9,5% en poids de PVDF, 40% de NMP et 50,5% de PC qui est un non-solvant faible. On trempe l'électrode pendant 15 à 20 minutes dans l'eau provoquant la précipitation du polymère. L'électrode est séchée à l'air à 35°C puis 110°C pour enlever toute trace d'eau et de solvants. On obtient alors une couche de PVDF de 50µm d'épaisseur et de porosité 50%, indissociable de la première couche.

L'électrode préparée précédemment est associée à une contre-électrode qui lui est analogue mais ne comporte pas de deuxième couche. L'électrolyte est un mélange de PC et de tétrafluoroborate d'éthylammonium Et4NBF4 à une concentration de 1M.

Le supercondensateur est déchargé à plusieurs reprises à un courant de 1mA/g de charbon actif. La figure 5 montre l'évolution de la capacité (courbe 51) au cours du cyclage du supercondensateur selon l'invention. On constate une excellente stabilité de la capacité sur plus de 1000 cycles.

### EXEMPLE 5

Afin de pouvoir tester une électrode selon la présente invention, on assemble un supercondensateur de type bouton analogue à celui décrit dans l'exemple 3, mais comportant deux électrodes selon l'invention placées face à face de telle sorte que la deuxième couche de chacune des électrodes soient en contact. Dans ce cas l'épaisseur de la deuxième couche de chaque électrode est de 20µm. La présence de la deuxième couche améliore la tenue mécanique de chacune des électrodes. De plus la quantité de polymère utilisé put être minimisée par rapport au cas ou le séparateur est porté par une seule électrode. Ici l'épaisseur totale des deuxièmes couches n'est que de 40µm.

Bien entendu la présente invention n'est pas limitée aux modes de réalisation décrits et représentés, mais elle est susceptible de nombreuses variantes accessibles à l'homme de l'art sans que l'on ne s'écarte de l'esprit de l'invention. En particulier, on pourra sans sortir du cadre de l'invention utiliser pour réaliser la première couche toute matière électrochimiquement active d'électrode connue et tout liant polymère usuel. L'électrode selon l'invention peut être assemblée dans des éléments électrochimiques de forme géométrique et de dimension variées: cylindrique, prismatique, etc....

## Revendications

1. Supercondensateur ou générateur électrochimique à électrolyte liquide non-aqueux comportant une électrode comprenant une première couche poreuse électroniquement conductrice contenant une matière électrochimiquement active, ladite première couche comportant au moins une face recouverte d'une deuxième couche microporeuse constituée d'un matériau polymère, ladite deuxième couche étant étroitement liée à ladite première couche et étant réalisée par précipitation dudit polymère au moyen d'un non-solvant à partir d'une solution dudit polymère imprégnant ladite face.

2. Supercondensateur ou générateur selon la revendication 1, dans laquelle le volume poreux de ladite deuxième couche est compris entre 30% et 95%.

3. Supercondensateur ou générateur selon l'une des revendications 1 et 2, dans laquelle l'épaisseur de ladite deuxième couche est comprise entre 10µm et 100µm.

4. Supercondensateur ou générateur selon l'une des revendications précédentes, dans laquelle ladite deuxième couche est constituée d'un matériau polymère choisi parmi le polyfluorure de vinylidène, le polychlorure de vinyle, le polyméthylmétacrylate, l'acétate de cellulose, une polysulfone, un polyéther, une polyoléfine, et leurs copolymères.

5. Supercondensateur ou générateur selon l'une des revendications 1 à 3, dans laquelle ladite deuxième couche est constituée d'un matériau polymère qui est un alliage du polyfluorure de vinylidène avec un polymère choisi parmi une polysulfone, le polyméthylmétacrylate, le polyvinylpyrolidone, et les copolymères de polyfluorure de vinylidène et de polytétrafluorure d'éthane, de polyfluorure de vinylidène et d'hexafluorure de propylène, de vinylacétate et de vinylalcool.

6. Supercondensateur ou générateur selon l'une des revendications précédentes, dans laquelle ladite deuxième couche contient en outre un agent mouillant dans une proportion inférieure à 10% en poids dudit polymère.

7. Supercondensateur ou générateur selon l'une des revendications précédentes, dans laquelle ledit matériau polymère constituant ladite deuxième couche est réticulé.

8. Supercondensateur ou générateur selon l'une des revendications précédentes, dans lequel ladite électrode comprend en outre un support conducteur de courant.

9. Supercondensateur ou générateur selon la revendication 8, dans laquelle ledit support est situé au contact de ladite première face de ladite première couche et ladite deuxième couche est adhérente à ladite deuxième face de ladite première couche.

10. Supercondensateur ou générateur selon la revendication 8, dans laquelle ledit support est inclus dans ladite première couche et ladite deuxième couche est adhérente à ladite première face et à ladite deuxième face de ladite première couche.

11. Supercondensateur selon l'une des revendications 1 à 10, dans lequel ladite matière électrochimiquement active est choisie parmi le charbon actif et un oxyde d'un métal de transition, et ladite deuxième couche est constituée de polyfluorure de vinylidène.

12. Générateur électrochimique selon l'une des revendications 1 à 10, dans lequel ladite matière électrochimiquement active est choisie parmi les matériaux susceptibles d'intercaler un cation alcalin, et ladite deuxième couche est constituée d'un matériau polymère qui est le polyfluorure de vinylidène.

13. Procédé de fabrication d'un supercondensateur ou d'un générateur électrochimique à électrolyte liquide non-aqueux selon l'une des revendications 1 à 12, comportant une électrode réalisée de la manière suivante:
- on réalise ladite première couche,
- on recouvre ladite première couche d'un film de solution dudit polymère dans un solvant volatil,
- on met en contact ledit film avec un premier non-solvant volatil miscible avec ledit solvant afin de précipiter ledit polymère,
- on sèche ladite électrode comprenant ladite première couche et ladite deuxième couche, pour éliminer ledit solvant et ledit non-solvant.

14. Procédé selon la revendication 13, dans lequel ledit solvant est un solvant organique choisi parmi la cyclohexanone, le dichlorométhane, la diméthylacétamide, la diméthylformamide, l'hexaméthylphosphoramide, la diméthylsulfoxyde, le triéthylphosphate, la N-méthylpyrolidone et leurs mélanges.

15. Procédé selon l'une des revendications 13 et 14, dans lequel ladite solution comprend en outre un deuxième non-solvant dans une proportion insuffisante pour provoquer la précipitation du polymère.

16. Procédé selon l'une des revendications 13 à 15, dans lequel ledit premier et/ou ledit deuxième non-solvant sont choisis parmi l'eau, l'éthanol, l'éthylène glycol, le glycérol, l'acétone, le carbonate de propylène, le dichlorométhane, l'acétate d'éthyle, le butanol, le pentanol, l'acétonitrile et leurs mélanges.

17. Procédé selon l'une des revendications 13 à 16, dans lequel ladite première couche est imprégnée superficiellement d'un agent mouillant avant d'être recouverte dudit film de solution dudit polymère.

18. Procédé selon l'une des revendications 13 à 17, comportant en outre une étape de réticulation dudit polymère après séchage de ladite électrode, ladite solution contenant un agent de réticulation.

## Claims

1. A supercapacitor or an electric cell containing a non-aqueous liquid electrolyte, the supercapacitor or electric cell including an electrode comprising an electronically conducting porous first layer containing an electrochemically active material, said first layer including at least one face covered by a microporous second layer constituted by a polymeric material, said second layer being intimately connected to said first layer and being produced by precipitation of said polymer by means of a non-solvent from a solution of said polymer impregnating said face.

2. A supercapacitor or a cell according to claim 1, in which the pore volume of said second layer is in the range 30% to 95%.

3. A supercapacitor or a cell according to claim 1 or claim 2, in which the thickness of said second layer is in the range 10 µm to 100 µm.

4. A supercapacitor or a cell according to any one of the preceding claims, in which said second layer is constituted by a polymeric material selected from poly(vinylidene fluoride), poly(vinyl chloride), poly(methyl methacrylate), cellulose acetate, a polysulfone, a polyether, or a polyolefin, and copolymers thereof.

5. A supercapacitor or a cell according to any one of claims 1 to 3, in which said second layer is constituted by a polymeric material which is an alloy of poly(vinylidene fluoride) with a polymer selected from a polysulfone, poly(methyl methacrylate) and poly(vinylpyrrolidone), and copolymers of poly(vinylidene fluoride) and poly(tetrafluoroethylene), of poly(vinylidene fluoride) and propylene hexafluoride, or of vinyl acetate and vinyl alcohol.

6. A supercapacitor or a cell according to any preceding claim, in which said second layer also contains a wetting agent in a proportion of less than 10% by weight of said polymer.

7. A supercapacitor or a cell according to any preceding claim, in which said polymeric material constituting said second layer is cross-linked.

8. A supercapacitor or a cell according to any preceding claim, in which said electrode further contains a current conducting support.

9. A supercapacitor or a cell according to claim 8, in which said support is positioned in contact with said first face of said first layer and said second layer adheres to said second face of said first layer.

10. A supercapacitor or a cell according to claim 8, in which said support is included in said first layer and said second layer adheres to said first face and to said second face of said first layer.

11. A supercapacitor in accordance with any one of claims 1 to 10, in which said electrochemically active material is selected from activated charcoal and a transition metal oxide, and said second layer is constituted by poly(vinylidene fluoride).

12. An electric cell in accordance with any one of claims 1 to 10, in which said electrochemically active material is selected from materials which can intercalate an alkaline cation, and said second layer is constituted by a polymeric material which is poly(vinylidene fluoride).

13. A method of producing a supercapacitor or an electric cell containing a non-aqueous liquid electrolyte according to any one of claims 1 to 12, the supercapacitor or electric cell including an electrode produced in the following way:
· said first layer is produced;
· said first layer is coated with a film of a solution of said polymer in a volatile solvent;
· said film is brought into contact with a first volatile non-solvent which is miscible with said solvent so as to precipitate said polymer; and
· said electrode comprising said first layer and said second layer is dried to eliminate said solvent and said non-solvent.

14. A method according to claim 13, in which said solvent is an organic solvent selected from cyclohexanone, dichloromethane, dimethylacetamide, dimethylformamide, hexamethylphosphoramide, dimethylsulfoxide, triethylphosphate, N-methylpyrrolidone, and mixtures thereof.

15. A method according to claim 13 or claim 14, in which said solution also comprises a second non-solvent in a proportion which is insufficient to cause precipitation of the polymer.

16. A method according to any one of claims 13 to 15, in which said first and/or said second non-solvent is selected from water, ethanol, ethylene glycol, glycerol, acetone, propylene carbonate, dichloromethane, ethyl acetate, butanol, pentanol, acetonitrile, and mixtures thereof.

17. A method according to any one of claims 13 to 16, in which said first layer is superficially impregnated with a wetting agent before being covered with said film of said solution of said polymer.

18. A method according to any one of claims 13 to 17, further comprising a step for cross-linking said polymer after drying said electrode, said solution containing a cross-linking agent.

## Patentansprüche

1. Superkondensator oder elektrochemischer Generator mit flüssigem, nicht wässrigem Elektrolyten, mit einer Elektrode, die eine erste elektronisch leitende poröse Schicht umfasst, die ein elektrochemisch aktives Material enthält, wobei die erste Schicht wenigstens eine Seite aufweist, die mit einer mikroporösen zweiten Schicht bedeckt ist, die aus einem Polymermaterial besteht, wobei die zweite Schicht eng mit der ersten Schicht verbunden und durch Ausfällung des Polymers mit Hilfe eines Nichtlösungsmittels aus einer die Seite imprägnierenden Lösung des Polymers abgeschieden ist.

2. Superkondensator oder Generator nach Anspruch 1, bei dem das Porenvolumen der zweiten Schicht zwischen 30 % und 95 % beträgt.

3. Superkondensator oder Generator nach einem der Ansprüche 1 und 2, bei dem die Dicke der zweiten Schicht zwischen 10 µm und 100 µm beträgt.

4. Superkondensator oder Generator nach einem der vorhergehenden Ansprüche, bei dem die zweite Schicht aus einem Polymermaterial gebildet ist, das unter Polyvinylidenfluorid, Polyvinylchlorid, Polymethylmethacrylat, Celluloseacetat, einem Polysulfon, einem Polyether, einem Polyolefin und ihren Copolymeren ausgewählt ist.

5. Superkondensator oder Generator nach einem der Ansprüche 1 bis 3, bei dem die zweite Schicht aus einem Polymermaterial gebildet ist, das eine Legierung von Polyvinylidenfluorid mit einem Polymer ist, das unter Polysulfon, Polymethylmethacrylat, Polyvinylpyrrolidon und den Copolymeren von Polyvinylidenfluorid und Polytetrafluorethan, von Polyvinylidenfluorid und Propylenhexafluorid, von Vinylacetat und Vinylalkohol ausgewählt ist.

6. Superkondensator oder Generator nach einem der vorhergehenden Ansprüche, bei dem die zweite Schicht ferner ein Benetzungsmittel in einem Anteil von weniger als 10 Gewichtsprozent des Polymers enthält.

7. Superkondensator oder Generator nach einem der vorhergehenden Ansprüche, bei dem das Polymermaterial, das die zweite Schicht bildet, vernetzt ist.

8. Superkondensator oder Generator nach einem der vorhergehenden Ansprüche, bei dem die Elektrode ferner einen stromleitenden Träger umfasst.

9. Superkondensator oder Generator nach Anspruch 8, bei dem der Träger in Kontakt mit der ersten Seite der ersten Schicht angeordnet ist und die zweite Schicht an der zweiten Seite der ersten Schicht haftet.

10. Superkondensator oder Generator nach Anspruch 8, bei dem der Träger in der ersten Schicht enthalten ist und die zweite Schicht an der ersten Seite und an der zweiten Seite der ersten Schicht haftet.

11. Superkondensator oder Generator nach einem der Ansprüche 1 bis 10, bei dem das elektrochemisch aktive Material unter Aktivkohle und einem Oxid eines Übergangsmetalls ausgewählt ist und die zweite Schicht aus Polyvinylidenfluorid gebildet ist.

12. Elektrochemischer Generator nach einem der Ansprüche 1 bis 10, bei dem das elektrochemisch aktive Material unter den Materialien, die in der Lage sind, ein Alkalikation einzugliedern, ausgewählt sind und die zweite Schicht aus einem Polymermaterial, nämlich Polyvinylidenfluorid, gebildet ist.

13. Verfahren zur Herstellung eines Superkondensators oder eines elektrochemischen Generators mit flüssigem, nicht wässrigem Elektrolyten nach einem der Ansprüche 1 bis 12, der eine auf folgende Weise realisierte Elektrode umfasst:
- die erste Schicht wird realisiert,
- die erste Schicht wird mit einem Film einer Lösung des Polymers in einem flüchtigen Lösungsmittel bedeckt,
- der Film wird mit einem ersten mit dem Lösungsmittel mischbaren flüchtigen Nichtlösungsmittel in Kontakt gebracht, um das Polymer auszufällen,
- die Elektrode, die die erste Schicht und die zweite Schicht umfasst, wird getrocknet um das Lösungsmittel und das Nichtlösungsmittel zu beseitigen.

14. Verfahren nach Anspruch 13, bei dem das Lösungsmittel ein organisches Lösungsmittel ist, das unter Cyclohexanon, Dichlormethan, Dimethylacetamid, Dimethylformamid, Hexamethylphosphamid, Dimethylsulfoxid, Triethylphosphat, N-Methylpyrrolidon und ihren Gemischen ausgewählt ist.

15. Verfahren nach einem der Ansprüche 13 und 14, bei dem die Lösung ferner ein zweites Nichtlösungsmittel in einem Anteil enthält, der unzureichend ist, um die Ausfällung des Polymers zu bewirken.

16. Verfahren nach einem der Ansprüche 13 bis 15, bei dem das erste und/oder zweite Nichtlösungsmittel unter Wasser, Ethanol, Ethylenglykol, Glycerin, Aceton, Propylencarbonat, Dichlormethan, Ethylacetat, Butanol, Pentanol, Acetonitril und ihren Gemischen ausgewählt sind.

17. Verfahren nach einem der Ansprüche 13 bis 16, bei dem die erste Schicht oberflächlich mit einem Benetzungsmittel imprägniert wird, bevor sie mit dem Film der Lösung des Polymers bedeckt wird.

18. Verfahren nach einem der Ansprüche 13 bis 17, ferner mit einem Schritt der Vernetzung des Polymers nach Trocknung der Elektrode, wobei die Lösung ein Vernetzungsmittel enthält.
